Europäisches Patentamt

European Patent Office

Office européen des brevets

(19)

(11) Veröffentlichungsnummer : **0 488 988 B1**

(12) **EUROPÄISCHE PATENTSCHRIFT**

(45) Veröffentlichungstag der Patentschrift :
15.09.93 Patentblatt 93/37

(51) Int. Cl.⁵ : **C02F 1/28,** D01F 13/02

(21) Anmeldenummer : **91890271.9**

(22) Anmeldetag : **11.11.91**

(54) **Verfahren zur Reinigung von wässerigen N-Methylmorpholin-N-oxid-Lösungen.**

(30) Priorität : **26.11.90 AT 2401/90**

(43) Veröffentlichungstag der Anmeldung :
**03.06.92 Patentblatt 92/23**

(45) Bekanntmachung des Hinweises auf die
Patenterteilung :
**15.09.93 Patentblatt 93/37**

(84) Benannte Vertragsstaaten :
**BE CH DE DK ES FR GB GR IT LI LU NL SE**

(56) Entgegenhaltungen :
**EP-A- 0 427 701**
**FR-A- 2 227 231**
**US-A- 4 851 128**

(73) Patentinhaber : **LENZING
AKTIENGESELLSCHAFT
Werkstrasse 1
A-4860 Lenzing (AT)**

(72) Erfinder : **Astegger, Stefan, Dr.
Feldgasse 14
A-4840 Vöcklabruck (AT)**
Erfinder : **Firgo, Heinrich, Dr.
Oberstadtgries 7
A-4840 Vöcklabruck (AT)**
Erfinder : **Wolschner , Bernd Dr.
Hatschekstrasse 8
A-4840 Vöcklabruck (AT)**
Erfinder : **Männer, Johann
Bach 97
4852 Weyregg/Attersee (AT)**
Erfinder : **Weinzierl, KarinDr.
Ausserungsnach 2
4850 Timelkam (AT)**
Erfinder : **Zinkeli, Stefan Ing.
Schacha 14
4844 Regau (AT)**
Erfinder : **Eichinger, Dieter Dr.
Oberstadtgries 5
4840 Vöcklabruck (AT)**

(74) Vertreter : **Müllner, Erwin, Dr. et al
Patentanwälte, Dr. Erwin Müllner, Dipl.-Ing.
Werner Katschinka, Dr. Martin Müllner,
Postfach 159, Weihburggasse 9
A-1010 Wien (AT)**

**Beschreibung**

Die Erfindung betrifft ein Verfahren zur Reinigung einer wässerigen N-Methylmorpholin-N-oxid (NMMO)-Lösung, insbesondere einer Spinnbadlösung, die bei der Herstellung cellulosischer Produkte anfällt.

Es ist bekannt, Cellulose in wässerige NMMO-Lösungen einzubringen und spinnfähige homogene Cellulose-Lösungen herzustellen. Durch Ausfällen dieser Lösungen in Wasser werden Folien, Fäden oder Formteile auf Cellulosebasis erhalten, also Gegenstände, die heute in großem Umfang nach dem Viskosefaserverfahren hergestellt werden. Spinnfähige Lösungen von Cellulose in wässerigem NMMO haben aber bezüglich Umweltverträglichkeit gegenüber Viskose den entscheidenden Vorteil, daß das NMMO aus dem Spinnbad wiedergewonnen werden kann und zudem keine schwefelhältigen Emissionen entstehen.

Um das NMMO, das in einem gebrauchter Spinnbad enthalten ist, zur neuerlichen Herstellung von spinnfähigen Cellulose-Lösungen verwenden zu können, muß die Spinnbadlösung gereinigt und konzentriert werden.

Eine vollständige Reinigung muß folgende Schritte umfassen:

A) Entfärbung:

Durch Abdampfen von Wasser, zwecks Konzentrierung des NMMO, aus verdünnten wässerigen NMMO-Lösungen treten aufgrund von Reaktionen von NMMO mit Celluloseabbauprodukten starke Gelb-bis Braunfärbungen auf.

Es bilden sich vor allem pigmentartige Verbindungen aus mehrwertigen Phenolen, aus Abbauprodukten der Cellulose selbst und aus NMMO-Stabilisatoren, die der Lösung üblicherweise beigesetzt werden müssen.

Durch zunehmende Verfärbung des NMMO können die cellulosischen Formkörper nicht mehr bis zu dem gewünschten Weißgrad gebleicht werden.

B) Entfernung der Übergangsmetalle:

Übergangsmetalle, bevorzugt Eisen, werden einerseits durch den eingesetzten Zellstoff, anderseits durch Korrosion in den Prozeßkreislauf eingeschleppt. Der Gehalt an Übergangsmetallionen ist aber insofern eine kritische Größe, da dadurch die Initialtemperatur für Spinnmasseverpuffungen herabgesetzt wird. Wird Gallussäurepropylester als Stabilisator eingesetzt, so bilden sich anionische Metallkomplexe, die mit Hilfe von Anionentauschern entfernt werden können. Setzt man als Stabilisator aber z. B. Rutin ein, so bilden sich mit Eisen Komplexe, die mit Ionentauschern nicht mehr entfernt werden können. Somit würde es ohne Reinigung durch die Kreislaufführung des NMMO unweigerlich zu einer Anreicherung an Eisen im Prozeß und damit zu einer Erhöhung des Sicherheitsrisikos kommen. Es ist daher eine Ausschleusung von Eisen und anderen Übergangsmetallionen aus dem Prozeß unbedingt erforderlich.

C) Entfernung der Nitrosamine:

In frischem NMMO können - bedingt durch seine Herstellung - noch Nitrosamine vorhanden sein; diese können eine Reihe verschiedener toxischer Wirkungen hervorrufen, wie z. B. akute Leberschädigungen, Gentoxizität sowohl in vitro als auch in Keimzellen, Krebserkrankungen in somatischen Zellen etc. Aufgrund der generell tumorinitiierenden Wirkung der Nitrosamine muß von der Arbeitssicherheit her auf einer vollständigen Entfernung derselben bestanden werden.

D) Entfernung der Trübstoffe:

Zusätzlich zu der Spinnbadverfärbung kann ein Niederschlag auftreten, der hauptsächlich aus cellulosischem Feinstmaterial besteht. Daneben liegen noch Alkali- und Erdalkalisalze vor. Diese Trübstoffe, die bei mehrmaliger Verwendung des Lösungsmittels ebenfalls angereichret werden sind ohne Hilfsmittel nicht filtrierbar; sie beeinträchtigen die Produktqualität, führen zu Störungen beispielsweise bei der inline Farbmessung und müssen daher entfernt werden.

Bei den genannten Reinigungsschritten ist zusätzlich zu berücksichtigen, daß hierbei ein NMMO-Verlust möglichst vermieden werden muß.

Die bisher bekannten Reinigungsverfahren bedienten sich der beiden folgenden, mit grundsätzlichen Nachteilen behafteten Methoden:

a) Reinigung mittels Anionentauscher (EP-A1-427 701, ein Stand der Technik gemäß Art. 54(3) EPÜ)

Bei dieser Methode ist die Entfärbung auf ionische Farbkomplexe beschränkt; Eisen oder Übergangsme-

EP 0 488 988 B1

talle können nur entfernt werden, wenn sie in Ionenform vorliegen, was u. a. vom Stabilisatorsystem abhängt; Nitrosamine können nicht entfernt werden; auch eine nennenswerte Entfernung des feincellulosischen Niederschlages ist nicht möglich; es sind relativ große Mengen an Regenerierchemikalien erforderlich.

b) Umkristallisieren aus Aceton

Diese Methode ist sehr zeit- und energieaufwendig; darüber hinaus liegt die NMMO-Rückgewinnungsrate nur bei maximal 85 %.

Gemäß der Erfindung können diese Nachteile dadurch vermieden werden, daß die Lösung mit Adsorptionsmitteln in Kontakt gebracht und anschließend einer Filtration unterworfen wird. Mit besonderem Vorteil können als Adsorptionsmittel Aluminiumoxid, Siliziumdioxid und/oder Kohle eingesetzt werden.

Derartige Reinigungsverfahren sind an sich bei der Reinigung von Abwässern, die bei der Celluloseherstellung anfallen, bekannt (FR-A-2 227 231, US-A-4 851 128). Der Zweck von solchen Abwasserreinigungsverfahren ist nicht wie im vorliegenden Fall, daß NMMO möglichst nicht entfernt werden soll.

Mit Hilfe des erfindungsgemäßen Verfahrens gelingt eine mindestens 70%ige Entfärbung der Lösung, eine praktisch quantitative Entfernung der Übergangsmetalle, eine völlige Entfernung der Nitrosamine sowie die Entfernung des feincellulosischen Niederschlages;

ferner ist die gereinigte Lösung absolut frei von jeglichen Trübstoffen;

ein weiterer, wesentlicher Vorteil des erfindungsgemäßen Verfahrens besteht darin, daß es praktisch zu keinem Aminoxid-Verlust kommt.

Die folgenden Hinweise dienen zur Erläuterung des Verfahrens:

i) Verwendet wurde $Al_2O_3$ der Type "C" der Fa. Degussa. Die Einsatzmenge lag gerechnet auf 20%iges Spinnbad bei zirka 1%. Die Verweilzeit war wenige Minuten. Das Adsorptionsmittel konnte gemeinsam mit den Trübstoffen durch einfache Filtration abgetrennt werden. Durch Nachwaschen des Filterkuches wurde NMMO vollständig rückgewonnen.

ii) Es wurde Kieselsäure der Fa. Degussa mit der Typenbezeichnung "FK 700" verwendet. Die Einsatzmenge lag bei 1 %,gerechnet auf 20%iges wässeriges NMMO. Die Verweilzeit lag bei wenigen Minuten, und die Abtrennung des $SiO_2$ gemeinsam mit den Trübstoffen erfolgte durch eine Filtration.

iii) Es wurden Pulverkohlen(aus Braun- oder Steinkohle) mit einer Korngröße von 0,15 mm im Durchschnitt verwendet. Entscheidend ist in diesem Falle die Korngröße der verwendeten Kohle und damit die Oberfläche, die zur Reinigung zur Verfügung steht.

Der Kohleeinsatz lag je nach Verunreinigungsgrad des Spinnbades, der erwünschten Reinigungswirkung und der Größe der aktiven Oberfläche der Kohle zwischen 0,1 % und 1 %, bezogen auf die Spinnbadmenge. Die Verweilzeit betrug im Schnitt wenige Minuten.

Auf eine normale Filtration zur Abtrennung der beladenen Kohle wirkt sich erstens der in geringen Spuren vorhandene cellulosische Niederschlag erschwerend aus, da der Druckverlust am Filter schon nach kürzester Filtrationsdauer enorm zunimmt, und zweitens die im Spinnbad vorhandenen Trübstoffe.

Aus diesem Grund werden zur Abtrennung der Kohlen folgende Methoden vorgeschlagen:

- Filtration mit Hilfe von Zellstoff
- Anschwemmfiltration oder
- Querstrommikrofiltration.

Im einzelnen ist hiebei folgendes zu beachten:

Filtration mit Hilfe von Zellstoff als Filterhilfsmittel.

Da schon geringste Spuren von Kohlefeinstanteilen die Bleichbarkeit der cellulosischen Formteile drastisch reduziert, muß die Abtrennung der beladenen Kohle absolut vollständig sein. Dies ist auch eine Garantie, daß Trübstoffe größtenteils entfernt wurden.

Sowohl der feincellulosische Niederschlag im NMMO-Spinnbad als auch die Kohlefeinstanteile führen aber schon nach kürzester Filtrationsdauer zu einem enormen Druckverlust am Filter. Es muß daher nach einer porösen Filterschicht gesucht werden, die für wässeriges NMMO zwar durchlässig ist, jene oben beschriebenen Feinststoffe aber zurückhält.

Diese Aufgabe wurde gelöst, indem Blattzellstoff mit einem Rührer in Wasser aufgeschlagen (um Fasern zu erzeugen) und anschließend an ein mäßig grobes Metallsieb angeschwemmt wurde. Nach Erhalt einer zirka 1 cm dicken Zellstoffschicht konnte die Kohle aus der Suspension vollständig abgetrennt werden. Durch Nachwaschen mit VE-Wasser (das ist vollständig entmineralisiertes Wasser) ließ sich das NMMO ohne Verluste aus der Filterschicht auswaschen.

Anschwemmfiltration

Eine ebenso poröse Filterschicht erhält man, wenn man die Kohle in Form einer Kohle/Wasser-Dicksuspension direkt an ein z. B. stehendes Kerzenfilter anschwemmt. Die zu reinigende Spinnbadlösung kann dann bis zur Erschöpfung der Kohle über diese Schicht geführt werden, wobei zu bemerken ist, daß es bei dieser

3

Fahrweise zu keinem Trüblauf, der durch Kohlefeinstanteile verursacht ist, kommt. Ist die Kohle in ihrer Reinigungswirkung erschöpft, kann durch Nachwaschen mit VE-Wasser das Aminoxid vollständig aus der Kohleschicht ausgewaschen werden. Ein stehendes Kerzenfilter bietet zudem den Vorteil, daß man zwecks Minimierung der Waschwassermenge, das Aminoxid vor dem Waschzyklus ablassen kann und damit die Ausbildung einer Mischzone beim Auswaschen der Kohle verhindert. Vor dem Trockenblasen der Kohle zur Erhöhung des Heizwertes wird das Waschwasser wiederum abgelassen. Wird beim Ablassen der jeweiligen Flüssigkeiten ein Druckunterschied zwischen der Kohleschicht außen und der Filterkerze innen aufrecht erhalten, ist ein Haftenbleiben der Kohleschicht auch beim Wechseln der Medien gewährleistet.

Querstrommikrofiltration

Zunächst wird eine Kohle-Spinnbad-Suspension im Vorlagebehälter einer Querstrommikrofiltration (QMF) angesetzt. Hierauf erfolgt eine kontinuierliche Abtrennung des gereinigten Spinnbades als Permeat der QMF. Die vom Volumen her stark eingedickte Kohlesuspension (das Retentat) wird anschließend über Kammerfilterpressen entwässert. Dann wird mit VE-Wasser in der Kammerfilterpresse die Kohle NMMO-frei gewaschen. Durch Einblasen von Luft kann die kohle noch weiter entwässert werden, um deren Heizwert zu erhöhen. Die Kohle kann entweder verheizt oder für einen neuerlichen Einsatz wieder regeneriert werden.

Zur Regeneration eignen sich z. B. die folgenden Regenerierchemikalien: Natronlauge, Natronlauge/Ethanol, Ammoniak/Methanol, Ammoniak/Propanol-2 und/oder Ammoniak/Aceton.

Die zu regenerierende Kohle wird nach der vollständigen Elution des NMMO in der Regenerierlösung suspendiert und danach abfiltriert. Nach der Neutralwäsche kann sie dann wieder zur Reinigung der wässerigen NMMO-Lösung eingesetzt werden.

Zur Überprüfung der Reinigungswirkung der einzelnen Verfahrensvarianten wurden folgende Analysenmethoden verwendet:
- Entfärbung: durch Messung der Extinktion bei 470 nm mit einem Perkin-Elmer Photometer
- Eisengehalt: mittels Atomabsorption und Röntgenfluoreszenzmessungen
- Trübung (verursacht durch den feincellulosischen Niederschlag): mit einem Trübungsmesser TRM-L der Fa. Drott
- Nitrosamine: nach gaschromatographischer Auftrennung Nachweis mit einem TEA Detektor der Fa. Thermo Electron. Die Eichung wurde mit N-Nitrosomorpholin und Dimethylnitrosamin vorgenommen.

Den folgenden Ausführungsbeispielen sind weitere Einzelheiten des erfindungsgemäßen Verfahrens zu entnehmen.

BEISPIEL 1: Einsatz von Aluminiumoxid als Adsorptionsmittel

50 ml NMMO-Spinnbad wurden mit 0,5 g Aluminiumoxid (das sind 0,1 %, bezogen auf Spinnbad) in einem Becherglas gerührt und anschließend 30 Minuten stehengelassen. Dann wurde über ein Blaubandfilter abfiltriert und das Filtrat analysiert.

Die Entfärbewirkung lag bei 98 %, die Eisenentfernung bei 94 %. Die Reduktion der Trübe betrug 98 %

BEISPIEL 2: Einsatz von Siliziumdioxid als Adsorptionsmittel

50 ml Spinnbad wurden mit 0,5 g Siliziumdioxid vermischt und nach einer halben Stunde über ein Blaubandfilter filtriert.

Das Filtrat war vollständig klar, zu 72 % entfärbt und der Eisengehalt. war um 70 % reduziert.

BEISPIEL 3 bis 8: Einsatz von Braunkohle als Adsorptionsmittel

BEISPIEL 3:

2 g Braunkohlenkoksstaub wurden 2 Minuten in 100 ml Spinnbad suspendiert. Die Suspension wurde über eine Glasfritte Nr. 3 (15 cm² Filterfläche) mit aufgelegtem Blaubandfilter filtriert und die Extintion des Filtrates bei 470 nm gemessen.

Extinktion:            Spinnbad Ausgang: 0,608
                                 Spinnbad gereinigt: 0,095
Entfärbewirkung:      85 %
TRÜBE:                 Spinnbad Ausgang 16,3 FTU
                                 Spinnbad gereinigt 0,2 FTU
Reduktion der Trübe 98,8 %
(FTU = FORMAZIN-Trübungs-Einheit; FORMAZIN ist eine Eichsubstanz)

BEISPIEL 4:

Über 2,5 g Koksstaub wurden jeweils 100 ml Spinnbad (Extinktion 0,413) filtriert und die Extinktion des Filtrates bestimmt. Aus der Tabelle ist der Zusammenhang zwischen eingesetzter Kohlemenge und deren Entfärbewirkung ersichtlich.

| Verhältnis Kohle/Spinnbad | Extinktion 470 nm | Entfärbung % |
|---|---|---|
| 1:  40 | 0,042 | 90 |
| 1:  80 | 0,092 | 78 |
| 1:120 | 0,138 | 67 |
| 1:160 | 0,175 | 57 |
| 1:200 | 0,208 | 49 |
| 1:240 | 0,255 | 38 |
| 1:280 | 0,283 | 31 |
| 1:320 | 0,318 | 22 |

Die Reduktion der Trübe war in allen Fällen über 95 %, allerdings stieg die Filtrationsdauer innerhalb der Versuchsserie bis auf das Zehnfache.

BEISPIEL 5:

200 ml Spinnbad (20,6 % NMMO) wurden über 27,37 g (=50 ml) trockenen Koksstaub filtriert. Dabei erhielt man 48,52 g feuchten Koksstaub; dies entspricht einer NMMO-Menge von 4,45 g. Die feuchte Kohle wurde viermal mit je 50 ml VE-Wasser nachgewaschen und der NMMO-Gehalt der einzelnen Waschwasserfraktionen bestimmt.

| | NMMO (%) | NMMO (g) |
|---|---|---|
| 1. Waschwasserfraktion | 6,8 | 3,40 |
| 2. Waschwasserfraktion | 1,6 | 0,80 |
| 3. Waschwasserfraktion | 0,4 | 0,20 |
| 4. Waschwasserfraktion | 0,1 | 0,05 |
| Summe | | 4,45 |

BEISPIEL 6:

Eine 20%ige wässerige NMMO-Lösung wurde mit $FeCl_3 \cdot 6H_2O$ versetzt und dann bei verschiedenem Kohleinsatz die Eisenentfernung gemsssen. Die Extinktion bei 470 nm des Ausganges lag bei 0,682, der Eisengehalt war 33,5 ppm, die Trübung betrug 20,3 FTU.

| Kohleeinsatz % | Extinktion 470 nm | Entfärbung % | Fe ppm | Fe-Entfernung % | Klärung % |
|---|---|---|---|---|---|
| 0,2 | 0,081 | 88 | 3,1 | 90,7 | 96,3 |
| 0,5 | 0,031 | 95 | 1,5 | 95,5 | 97,1 |
| 1,0 | 0,020 | 97 | 1,2 | 96,4 | 97,8 |
| 2,0 | 0,009 | 98 | 1,1 | 96,7 | 98,0 |

BEISPIEL 7:

5 kg Koksstaub wurden in 200 ml einmal verwendetem Spinnbad (20,7 % NMMO) 5 Minuten dispergiert. Zur Abtrennung der Kohle wurde ein 5 μ GAF-Filter (5 l) verwendet. Das erste Filtrat war durch Kohlefeinstanteile schwarz gefärbt,wurde jedoch mit zunehmender Filtrationsdauer immer heller, bis es schließlich wasserklar war.

| Entfärbung im Schnitt: | 93 % |
| Reduktion der Trübe: | 97,5 % |

BEISPIEL 8:

200 g Kohle wurden in 1800 ml VE-Wasser suspendiert und an ein stehendes Kerzenfilter (Filterfläche 0,012 m$^2$) der Fa. Dr. M. Marke Fundapack angeschwemmt. Insgesamt wurden 44 l gereinigt, der spezifische Fluß nahm in dieser Zeit von 1250 l/m$^2$ ,h auf 910 l/m$^2$ ,h ab. Die Entfärbewirkung lag bei 96,4 %. Die Trübereduktion war 99 %, die Eisenreduktion 96 %. Zum Auswäschen des NMMO wurden 3 l VE-Wasser verwendet, NMMO wurde dabei vollständig aus der Kohle ausgewaschen. Durch Einblasen von 7 l Luft erreichte man einen Trockengehalt. der Kohle von 62 %.

BEISPIEL 9: Einsatz von Aktivkohle als Adsorptionsmittel

200 l Spinnbad (20 % NMMO) wurden im Vorlagebehälter einer Querstrommikrofiltrationsanlage mit 0,5 % Aktivkohle der Fa. Chemviron Typ "BL" vermischt und auf 50°C vorgeheizt. Zur Abtrennung der Kohle und der cellulosischen Feinstanteile (Ausgang: 12 FTU) wurde eine Teflonmembran der Fa. Purolator eingesetzt.

| Überströmung der Membran: | 2 m/s |
| Druckdifferenz: | 0,2 bar |
| Permeatfluß: | 1660 l/m$^2$/h abnehmend auf 1000 l/m$^2$/h |
| Trübe des Permeats: | 0,2 FTU |

Es fand keine Aufkonzentrierung an NMMO statt (die NMMO-Konzentration des Ausganges war mit jenen von Permeat und Retentat identisch).

Die Kohlesuspension wurde auf 9 l eingeengt, das entspricht einer Aufkonzentrierung von 1:22. Anschließend wurde die Kohledicksuspension in einer Kammerfilterpresse (Anschwemmdruck gegen Ende 10 bar) entwässert und der Kohlekuchen mit VE-Wasser NMMO-frei gewaschen. Anschließend wurde durch Einblasen von Luft ein Trockengehalt der Kohle von 59,6 % erreicht.

| Anschwemmen | | Auswaschen | | |
|---|---|---|---|---|
| Druck bar | Menge l | Druck bar | Menge l | NMMO-Konz % |
| 0,1 | 0 | 5,0 | 0 | 14,48 |
| 0,2 | 2 | 7,9 | 3 | 7,38 |
| 0,4 | 3 | 7,5 | 6 | 1,37 |
| 0,5 | 4 | 7,4 | 9 | 0,70 |
| 0,7 | 5 | 6,5 | 12 | 0,48 |
| 1,0 | 6 | 7,4 | 15 | 0,00 |
| 1,4 | 7 | | | |
| 3,0 | 8 | | | |
| 10,0 | 9 | | | |

BEISPIEL 10: Regenerierung der gemäß Beispiel 9 eingesetzten Aktivkohle

Es wird die Regeneration der Aktivkohle näher erläutert, die vorzugsweise mittels Natronlauge in Kombination mit einem organischen Lösungsmittel, bevorzugt Aceton, erfolgt; hiebei ist es gelungen, den Kapazitätsverlust nach der Regenerierung unter 2 % zu halten.

Es wurde ein einmal gebrauchtes Spinnbad mit einer Konzentration von 19,8 % und Aktivkohle der Fa. Chemviron eingesetzt. Für jede Beladung wurde die Aktivkohle durch intensives Rühren im Spinnbad suspendiert. Das Abfiltrieren der Kohle erfolgte über ein Membranfilter (Type PA oder Versapor). Der Filterkuchen wurde mit VE-Wasser neutral gewaschen und in kleinen Portionen mit Regenerierlösung behandelt. Nach der Neutralwäsche wurde die Kohle von der Membran abgeschabt und wieder eingesetzt.

Vergleich der Kohlekapazität nach der Regeneration mit den verschiedenen Regenerationslösungen:
(Kohleneinsatz bezogen auf NMMO: 0,5 %)

| Kapazität der Kohle (% vom Nullwert) | | | | |
|---|---|---|---|---|
| Regenerier-lösung | NaOH / H$_2$O | NH$_4$OH / MeOH | NH$_4$OH / PrOH | NH$_4$OH / Aceton |
| Regener-ierung | | | | |
| 1 | 94,4 % | 97,4 % | 97,1 % | 95,8 % |
| 2 | 89,2 % | 91,7 % | 93,4 % | 93,5 % |
| 3 | 84,2 % | 95,0 % | 92,1 % | 89,5 % |
| 4 | 80,8 % | 88,9 % | 89,5 % | 91,2 % |
| 5 | 75,9 % | | 88,5 % | 90,3 % |
| 6 | | | 87,7 % | 90,2 % |
| 7 | | | 85,5 % | 90,7 % |
| 8 | | | 82,2 % | 87,8 % |
| 9 | | | 80,7 % | 83,9 % |
| 10 | | | 82,9 % | 84,9 % |
| 11 | | | | 86,6 % |
| 12 | | | | 86,6 % |
| 13 | | | | 87,7 % |
| 14 | | | | 79,2 % |
| 15 | | | | 80,8 % |
| 16 | | | | 81,0 % |
| 17 | | | | 79,7 % |
| 18 | | | | 75,6 % |
| 19 | | | | 78,5 % |

**Patentansprüche**

1.   Verfahren zur Reinigung einer wässerigen N-Methylmorpholin-N-oxid-Lösung, insbesondere einer Spinnbadlösung, dadurch gekennzeichnet, daß die Lösung mit Adsorptionsmitteln in Kontakt gebracht und anschließend einer Filtration unterworfen wird.

2.   Verfahren nach Anspruch 1, dadurch gekennzeichnet, daß als Adsorptionsmittel Aluminiumoxid eingesetzt wird.

3.   Verfahren nach Anspruch 1, dadurch gekennzeichnet, daß als Adsorptionsmittel Siliziumdioxid eingesetzt wird.

4.   Verfahren nach Anspruch 1, dadurch gekennzeichnet, daß als Adsorptionsmittel Kohle eingesetzt wird.

5.   Verfahren nach einem der Ansprüche 1 bis 4, dadurch gekennzeichnet, daß die Adsorptionsmittel eine Korngröße < 0,15 mm aufweisen.

6.   Verfahren nach Anspruch 4, dadurch gekennzeichnet, daß die Filtration mit Hilfe von Zellstoff als Filterhilfsmittel erfolgt oder eine Anschwemmfiltration oder eine Querstrommikrofiltration ist.

## Claims

1. A method for cleaning an aqueous N-methylmorpholine-N-oxide solution, in particular of a spinning bath solution, characterised in that the solution is brought into contact with adsorption agents and is then subjected to a filtration.

2. A method according to Claim 1, characterised in that aluminium oxide is used as adsorption agent.

3. A method according to Claim 1, characterised in that silicon dioxide is used as adsorption agent.

4. A method according to Claim 1, characterised in that carbon is used as adsorption agent.

5. A method according to one of Claims 1 to 4, characteried in that the adsorption agents have a grain size < 0.15 mm.

6. A method according to Claim 4, characterised in that the filtration takes place with the aid of cellulose as filtering adjuvant or is an alluvial filtration or a cross current microfiltration.

## Revendications

1. Procédé de purification d'une solution aqueuse de N-méthylmorpholine-N-oxyde, notamment d'une solution d'un bain de tissage, caractérisé en ce que ladite solution est mise au contact d'un agent d'adsorption puis est ensuite soumise à une filtration.

2. Procédé selon la revendication 1, caractérisé en ce que l'agent d'adsorption consiste en oxyde d'aluminium.

3. Procédé selon la revendication 1, caractérisé en ce que l'agent d'adsorption consiste en oxyde de silicium.

4. Procédé selon la revendication 1, caractérisé en ce que l'agent d'adsorption consiste en charbon.

5. Procédé selon l'une des revendications 1 à 4, caractérisé en ce que la dimension particulaire de l'agent d'adsorption est inférieure à 0,15 mm.

6. Procédé selon la revendication 4, caractérisé en ce que la filtration est soit une filtration en présence d'un adjuvant de filtration consistant en un matériau cellulaire, soit une filtration à contre-courant ou une microfiltration selon une direction transversale.